Europäisches Patentamt

European Patent Office

Office européen des brevets

(11) Numéro de publication : **0 277 058 B1**

(12) **FASCICULE DE BREVET EUROPEEN**

(45) Date de publication du fascicule du brevet :
**22.01.92 Bulletin 92/04**

(51) Int. Cl.⁵ : **F16L 31/00, B29C 45/14**

(21) Numéro de dépôt : **88400063.9**

(22) Date de dépôt : **13.01.88**

(54) **Procédé de fabrication de dispositifs comme des raccords de dérivation ou analogues sur des tubes ou tuyaux souples, en particulier à base de caoutchouc.**

(30) Priorité : **23.01.87 FR 8700754**

(43) Date de publication de la demande :
**03.08.88 Bulletin 88/31**

(45) Mention de la délivrance du brevet :
**22.01.92 Bulletin 92/04**

(84) Etats contractants désignés :
**BE DE ES IT LU NL**

(56) Documents cités :
**EP-A- 154 926
EP-A- 158 878**

(56) Documents cités :
**EP-A- 0 191 700
AU-B- 547 828
DE-B- 1 255 290
GB-A- 2 157 386**

(73) Titulaire : **HUTCHINSON
2 rue Balzac
F-75008 Paris (FR)**

(72) Inventeur : **Briet, Gilles
Le Petit Vallot Neuvy-Grandchamp
F-71130 Gueugnon (FR)**

(74) Mandataire : **Brycman, Jean et al
CABINET ORES 6, Avenue de Messine
F-75008 Paris (FR)**

EP 0 277 058 B1

## Description

L'invention a pour objet un tube ou tuyau comportant un raccord de dérivation ou analogue et un procédé perfectionné de fabrication d'un tel tube ou tuyau, notamment une durite pour moteur de véhicule automobile.

On sait que les tubes ou tuyaux souples à base de caoutchouc utilisés dans le domaine de l'industrie automobile, en particulier mais non exclusivement ceux interposés entre le moteur et le radiateur pour l'acheminement du fluide de refroidissement, doivent fréquemment comporter des raccords de purge ou de dérivation qui, quelle que soit leur utilisation, sont à l'origine d'un branchement ou piquage sur le tuyau principal. On a déjà proposé, pour réaliser ces branchements, de sectionner le tuyau principal, d'emmancher les deux parties du tuyau sur les ailes d'un té en matière plastique ou en métal et le tuyau de dérivation sur le corps du té puis d'assurer la solidarisation à l'aide de colliers de serrage fixés au voisinage des extrémités des tronçons de tuyaux. Ce dispositif très simple et de faible coût exige cependant trois opérations d'assemblage et l'approvisionnement d'une chaîne de montage en organes correspondants, alors que les techniques actuelles de l'industrie automobile cherchent à s'affranchir de ces opérations et de la gestion qu'elles impliquent d'un stock de pièces détachées.

Aussi a-t-on proposé de remplacer le dispositif à té en plastique par un raccord de dérivation obtenu par moulage d'un enrobage de caoutchouc autour d'une partie au moins d'un insert rigide tubulaire compris dans le raccord de dérivation, comme décrit, par exemple, dans FR-A-2 549 196. Un tel procédé permet l'obtention de raccords de dérivation satisfaisants et largement utilisés. Cependant, leur emploi est parfois limité par leur coût, qui est quelquefois supérieur à celui du dispositif à té antérieur, et c'est pourquoi la Demanderesse a cherché à perfectionner le procédé existant pour abaisser le prix des dispositifs obtenus tout en garantissant la qualité des produits fabriqués, en particulier en ce qui concerne l'absence de fuites du fluide circulant dans le tube ou tuyau souple.

On connaît, par ailleurs, par DE-B-1 255 290, un tube ou tuyau comportant un raccord de dérivation en matière plastique surmoulé in situ sur lui suivant un manchon qui l'enserre extérieurement avec une partie d'une pièce avec ledit manchon et en saillie radiale par rapport à lui. Ce tube ou tuyau entièrement en matière plastique et, en fait, en la même matière pour le tube et le raccord, est réalisé en injectant autour d'un tuyau la même matière plastique que celle constitutive du tuyau, avantageusement en réchauffant celui-ci pour l'amener à l'état plastique ou liquide. Un tel mode opératoire ne convient pas, bien entendu, pour la fabrication de tubes ou tuyaux souples à base de caoutchouc qui ne peuvent être chauffés sous peine d'être détruits.

C'est pourquoi une autre solution doit être trouvée au problème posé.

Conformément à l'invention, et à la suite des travaux effectués par la Demanderesse, le problème est résolu par un tube ou tuyau comportant un raccord de dérivation ou analogue en matière plastique surmoulé in situ sur lui sous la forme d'un manchon qui l'enserre extérieurement sur au moins la majeure partie de sa périphérie angulaire avec une partie d'une pièce avec ledit manchon et en saillie radiale par rapport audit manchon constituant la dérivation ou analogue, caractérisé en ce que le tube ou tuyau est un tube ou tuyau souple à base de caoutchouc EPDM, de caoutchouc polychloroprène ou de caoutchouc silicone et en ce que ledit raccord ou analogue en matière plastique du type thermoplastique ou thermodurcissable est solidarisé par adhérence et par l'effet même ou surmoulage par injection avec ledit tube ou tuyau souple.

Selon une autre caractéristique de l'invention, le raccord surmoulé in situ sur le tube ou tuyau ménage un embout destiné au montage d'un second tube ou tuyau formant dérivation par rapport au premier.

Dans une forme de réalisation l'embout ménage un évidement cylindrique dans lequel est reçu le second tube ou tuyau également à base de caoutchouc et fixé par sa surface externe dans ledit évidement.

Dans un mode de réalisation, le raccord ménage un embout se prolongeant par un appendice qui pénètre dans un orifice de dérivation du tube ou tuyau et qui affleure la surface interne dudit tube ou tuyau.

Selon une autre caractéristique de l'invention, le raccord en matière plastique surmoulé in situ sur le tube ou tuyau comprend des moyens d'accrochage à encliquetage d'un manchon enserrant le second tube ou tuyau formant dérivation par rapport au tube ou tuyau principal.

L'invention prévoit aussi que le manchon qui enserre le second tube ou tuyau soit conformé sur une partie de sa surface externe suivant des gorges ou des nervures et le tube suivant des nervures ou gorges de forme et dimension conjuguées.

Lorsque le prolongement de l'embout comprend un appendice qui pénètre dans l'orifice de dérivation du tube ou tuyau, celui-ci est conformé suivant une portée conique avec laquelle est propre à coopérer l'extrémité tronconique d'un manchon fixé sur un second tube ou tuyau avec interposition d'un joint d'étanchéité, comme un joint torique ou analogue.

Dans une forme de réalisation, le raccord surmoulé in situ sur le tube ou tuyau à base de caoutchouc est conformé pour ménager sur sa face externe un filetage sur lequel peut être vissé un bouchon de purge.

En variante, la paroi interne du raccord est conformée suivant un taraudage avec lequel est alors propre à coopérer une vis de purge ou tout autre élément approprié, par exemple un élément de capteur.

Dans un mode d'exécution avantageux, on prévoit d'associer au raccord un moyen de fixation comme une patte, une bride ou analogue de liaison de l'ensemble à un véhicule ou à un organe de véhicule automobile, dans le cas d'un tube ou tuyau souple utilisé dans ce domaine.

Un procédé de fabrication d'un tube ou tuyau comportant un raccord de dérivation ou analogue suivant lequel on met en place à l'intérieur dudit tube ou tuyau un noyau rigide destiné à le supporter ; on place ledit tube ou tuyau et le noyau dans le moule d'une presse d'injection de matière plastique ; on injecte in situ dans le moule conformé suivant le raccord de dérivation ou analogue une matière plastique qui enserre ledit tube ou tuyau sur la face externe de celui-ci ; on extrait l'ensemble du moule et on retire le noyau du tube ou tuyau est caractérisé en ce que le tube ou tuyau est un tube ou tuyau souple à base de caoutchouc EPDM, de caoutchouc polychloroprène ou de caoutchouc silicone et en ce que, pour obtenir un raccord de dérivation ou analogue dans lequel la matière plastique du type thermoplastique ou thermodurcissable injectée est solidarisée par adhérence par l'effet même du surmoulage audit tube ou tuyau, on conduit l'injection de ladite matière plastique à une pression d'injection comprise entre 600 et 1200 Bars et à une température d'injection comprise entre 160 et 300°C.

Dans un mode d'exécution du procédé, on perce d'abord le tube ou tuyau suivant un orifice de dérivation avant mise en place à l'intérieur du tube ou tuyau du noyau rigide destiné à le supporter et on surmoule la matière plastique sur ledit tube ou tuyau dans une zone adjacente audit orifice sous la forme d'un manchon qui enserre ledit tube ou tuyau sur au moins la majeure partie de sa périphérie angulaire, à l'extérieur de celui-ci, avec en embout, téton ou analogue en saillie radiale par rapport audit manchon et à l'aplomb dudit orifice.

Conformément à l'invention, également, le procédé prévoit que, simultanément au surmoulage de la matière plastique sur le tube ou tuyau, on dispose au voisinage de la surface externe dudit tube ou tuyau un insert, comme une sonde de pression, de température ou d'une autre grandeur à mesurer et qui est ainsi, de fabrication, noyé dans le dispositif associé audit tube ou tuyau.

D'autres caractéristiques et avantages de l'invention apparaîtront de la description qui suit, faite à titre d'exemple et en référence au dessin annexé dans lequel ;

– la figure 1 est une vue en coupe transversale d'un raccord de dérivation selon l'invention ;

– la figure 2 est une vue partielle, analogue à celle de la figure 1 d'une autre forme de réalisation ;

– la figure 3 montre, en deux vues partielles, deux autres variantes de réalisation ;

– la figure 4 est une vue analogue aux trois précédentes mais pour encore une autre réalisation ;

– la figure 4a est une vue partielle d'encore une autre variante ;

– la figure 5 est une demi-vue, à plus grande échelle et en coupe longitudinale, d'un dispositif de raccord selon l'invention ;

– les figures 6 et 7 sont des vues analogues à la figure 5 pour deux autres variantes de réalisation ;

– la figure 8 est une représentation analogue aux figures 6 et 7 et illustre, en deux demi-vues, deux autres modes de réalisation d'un dispositif selon l'invention ;

– la figure 9 est une vue analogue à la figure 8 pour encore deux autres formes de réalisation, illustrées, chacune sur une demi-vue ;

– la figure 10 est une demi-vue analogue aux figures 6 et 7 mais pour une autre forme de réalisation ;

– la figure 11 est une vue en élévation d'un raccord complexe selon l'invention ;

– la figure 12 est une vue en coupe selon la ligne 12-12 de la figure 11 ;

– la figure 13 est une vue de dessus du dispositif montré sur les figures 11 et 12 ;

– les figures 14 et 15 sont des vues de détail, à plus grande échelle, de la partie encerclée en A sur la figure 12.

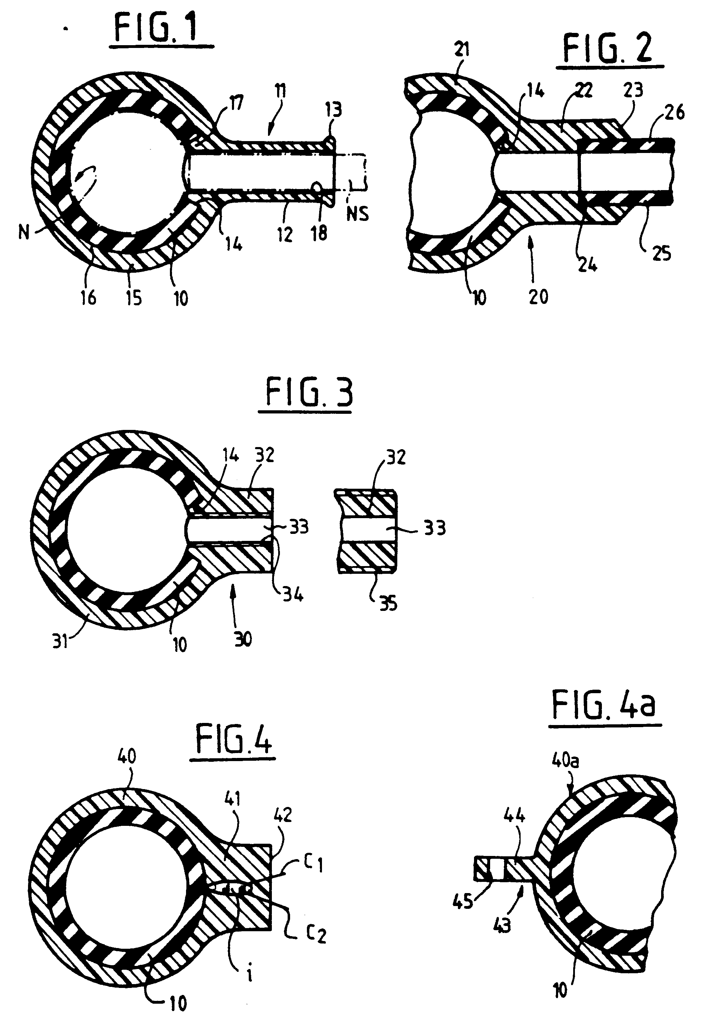

On se réfère d'abord à la figure 1 qui montre une première forme de réalisation d'un dispositif de raccord selon l'invention. Celui-ci est prévu sur un tube ou tuyau 10, à base de caoutchouc, par exemple une durite de radiateur de moteur d'automobile ou un conduit de liaison à un aérotherme d'un tel véhicule, lesdites indications n'ayant, bien entendu, aucun caractère limitatif. Pour munir ce tube ou tuyau 10 d'une dérivation 11, illustrée ici en tant qu' un embout à corps 12 et bourrelet d'extrémité 13. l'invention prevoit de réaliser ledit embout par surmoulage in situ sur le tube 10 d'une matière plastique du type thermoplastique ou thermodurcissable constitutive de l'embout. Pour ce faire, un orifice traversant 14 est d'abord percé dans la paroi du tube 10, puis un noyau rigide montré schématiquement en N est placé dans le tube et l'ensemble formé par ledit tube et le noyau N est mis en place dans une presse d'injection de matière plastique, non représentée. Le moule de ladite presse est conformé pour définir la forme du raccord 11, celle d'un manchon 15 monobloc avec ledit raccord et qui enserre le tube 10 sur une grande envergure de sa surface externe 16, ainsi que celle d'un appendice 17 dont la longueur est sensiblement égale à l'épaisseur dudit tube et qui prolonge l'embout 11 à l'intérieur du manchon 15, sensiblement dans la zone de liaison de l'un à l'autre.

Pour ménager le canal interne 18 de l'embout tubulaire 11, le moule d'injection est muni d'un noyau secondaire mobile, par exemple comme montré schématiquement en NS et qui pénètre dans un évidement du noyau principal N lors du moulage.

La matière thermoplastique ou thermodurcissable qui forme l'embout 11 et le manchon 15 est choisie en fonction des desiderata de la pratique de même que le matériau constitutif du tube ou tuyau 10 auquel l'embout adhère de façon satisfaisante par l'effet même du surmoulage.

Des essais conduits par la Demanderesse ont montré que de bons résultats ont été obtenus pour la fabrication d'un embout en polypropylène rapporté sur un tube en EPDM ou en polychloroprène ou en silicone lorsque le surmoulage est conduit à une pression d'injection comprise entre 600 et 1 200 bars et une température d'injection comprise entre 160 et 300°C.

Pour une pression de l'ordre de 0 à 4 bars du fluide transporté, un dispositif obtenu par le procédé défini ci-dessus s'est révélé d'utilisation satisfaisante pour toute la durée de vie du véhicule automobile, soit environ 1 800 à 2 200 heures.

Dans la réalisation selon la figure 2, le tube ou tuyau principal 10 à base de caoutchouc est celui reliant le moteur au radiateur d'un véhicule automobile, ledit tube ou tuyau principal étant prévu pour être équipé d'un tube 25 d'un circuit secondaire vers l'aérotherme du véhicule. Le raccord de dérivation 20 comporte un manchon 21 enserrant le tube et un court téton 22 s'étendant radialement par rapport audit manchon de plus grande épaisseur que celui-ci pour ménager au voisinage de son extrémité libre chanfreinée 23 un évidement cylindrique 24 dans lequel est reçu le tube 25, également à base de caoutchouc, et qui est fixé par sa surface externe 26 dans l'évidement 24 du téton 22. La fabrication du dispositif selon cette forme de réalisation est analogue à celle décrite ci-dessus, sous réserve que le moule d'injection est de forme différente pour permettre, en une seule opération, le surmoulage de la matière plastique constitutive du manchon 21 et du téton 22 sur le tube ou tuyau 10 et sur le tube 25, simultanément.

Dans la réalisation montrée sur la partie gauche de la figure 3, le tube ou tuyau 10 à base de caoutchouc est muni d'un raccord de dérivation 30 en matière plastique surmoulée, in situ, sur ledit tube ou tuyau et qui présente, en saillie radiale par rapport à un manchon 31 enserrant le tube ou tuyau 10 sur la quasi totalité de sa périphérie, un téton tubulaire 32 dont le forage longitudinal 33 est muni d'un taraudage 34 avec lequel est propre à coopérer la vis d'une purge, non représentée, alors que c'est un bouchon de purge qui est montré sur la représentation schématique de la partie droite de cette même figure pour coopérer avec un filetage 35 du téton 32 dont le forage interne 33 est alors lisse.

Dans la réalisation montrée sur la figure 4, le tube ou tuyau à base de caoutchouc 10 n'est pas percé d'un orifice traversant sa paroi, comme dans les réalisations décrites ci-dessus, mais est muni, par surmoulage in situ de matière plastique du type thermoplastique ou thermodurcissable, d'un manchon 40 enserrant le tube sur la quasi totalité de sa périphérie avec, en saillie radiale par rapport au manchon, un bossage cylindrique 41. Dans cette forme de réalisation, le moule d'injection de la matière plastique ne comporte pas de noyau secondaire, mais est garni d'un insert $i$, par exemple un capteur de pression ou de température qui, après extraction de l'ensemble hors du moule d'injection, est au contact du tube 10 avec des conducteurs comme $c_1$ ou $c_2$ faisant saillie sur la face d'extrémité 42 du bossage 41 pour la liaison à un indicateur de tableau de bord d'automobile ou analogue.

Dans le mode d'exécution montré schématiquement sur la figure 4a, le tube ou tuyau à base de caoutchouc 10 est muni d'un raccord de dérivation 40a en matière thermoplastique ou thermodurcissable surmoulée, in situ, sur ledit tube ou tuyau et qui présente complémentairement à un embout, non représenté, un moyen de fixation 43 à un support ou à une partie de véhicule, ledit moyen étant constitué par une oreille, une patte, une bride ou analogue 44 laquelle peut ou non présenter un orifice 45 de passage d'une vis de fixation ou analogue.

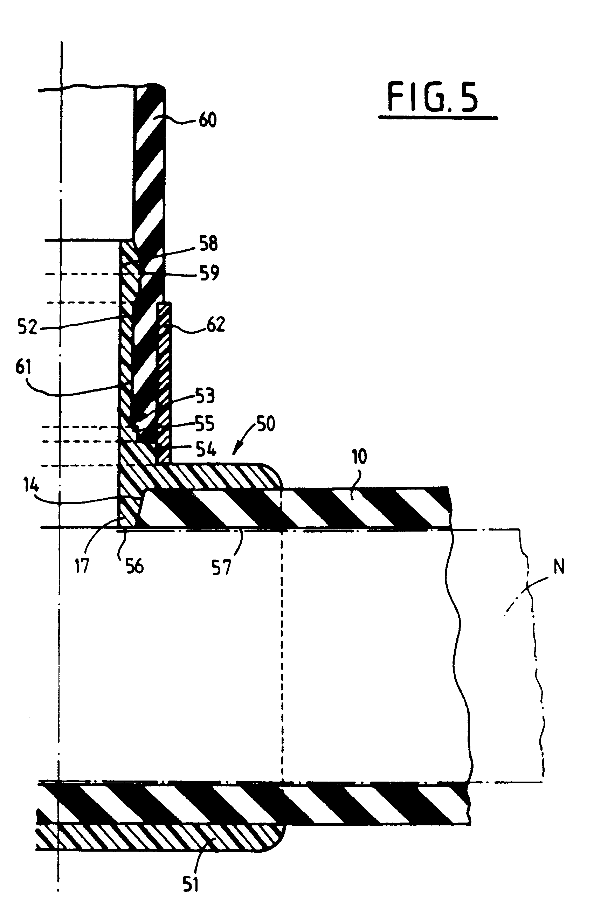

C'est un procédé semblable à celui décrit ci-dessus qui est mis en oeuvre pour la fabrication du dispositif montré sur la figure 5. Le tube ou tuyau 10 à base de caoutchouc percé d'un orifice 14 et garni d'un noyau N est mis en place dans une presse d'injection de matière plastique pour la formation, par surmoulage in situ sur ledit tube, d'un raccord de dérivation 50 à manchon 51 enserrant ledit tube et à embout 52 monobloc avec le manchon 51. Dans cette réalisation, le raccord de dérivation comprend, dans la zone de liaison de l'embout 52 au manchon 51, une zone 53 à gradins étagés 54 et 55, de même qu'un appendice 17 logé à l'intérieur de l'orifice 14 du tube et dont la surface interne 56 est à fleur de la surface interne 57 du tube 10, tandis qu'à son extrémité distante de celle de l'appendice 17 l'embout 52 est conformé suivant un bourrelet 58, lui aussi à gradins, pour ménager une nervure 59 en saillie sur sa face externe . La forme de cette dernière, obtenue directement de moulage, permet de positionner de manière satisfaisante sur ledit embout un second tube ou tuyau à base de caoutchouc, 60, qui forme ainsi un circuit de dérivation par rapport au circuit principal du tuyau ou tube 10 et dont la surface interne 61 vient s'appliquer sur la surface externe de l'embout, en épousant la forme de celui-ci, lorsqu'une bague de matière plastique 62 qui prend appui sur le manchon 51 et une face d'extrémité du degré 54 vient serrer ledit tube 60 sur le corps 52 de l'embout.

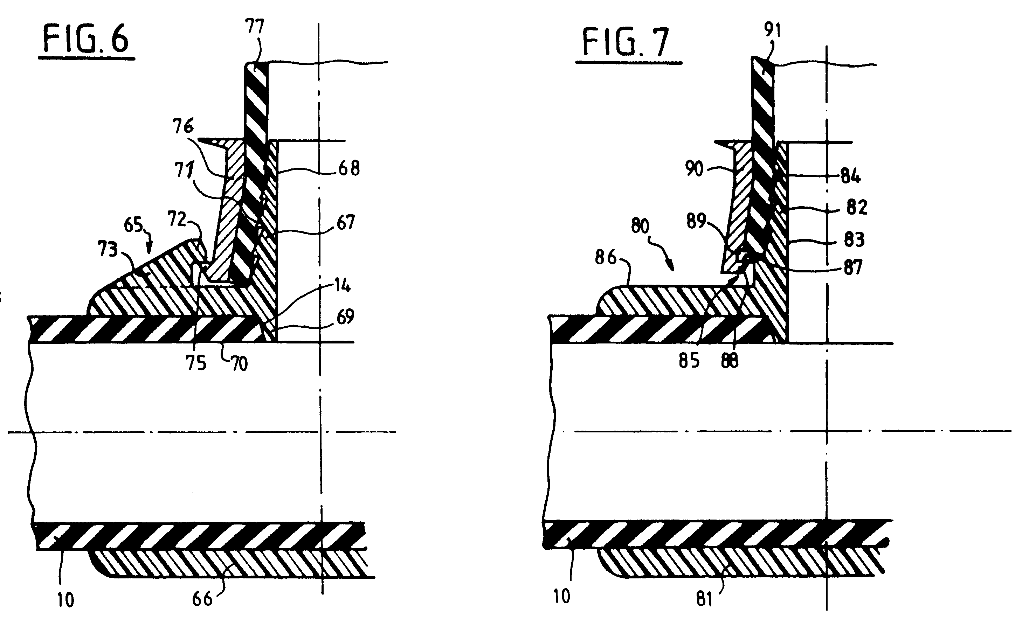

Dans la réalisation de la figure 6, le tube ou tuyau 10 à base de caoutchouc est muni, par le même procédé que celui décrit précédemment, d'un raccord de dérivation 65 en matière plastique moulé in situ sur ledit tube et qui comprend un manchon 66 régnant angulairement sur la plus grande partie de la périphérie du tube avec un téton tubulaire 67 dirigé radialement par rapport audit manchon. Dans cette réalisation, un appendice 69 logé dans l'orifice 14 du tube 10 jusqu'à la surface interne 70 dudit tube prolonge le téton 67 à surface interne 68 lisse mais à surface externe 71 en écailles ou arêtes de poisson se raccordant par une embase 73 à section droite triangulaire du bord du manchon 66 à un bec 72 ainsi distant à la fois du manchon 66 et du téton 67. Le bec 72 est propre à coopérer par encliquetage avec une nervure 75 d'un manchon 76 emmanché sur un tube ou tuyau secondaire 77, lui aussi à base de caoutchouc, un choix approprié des dimensions du tube 77 et du manchon 76 assurant une solidarisation satisfaisante des tubes 10 et 77, à laquelle contribuent les aspérités de la surface externe 71 du téton 67 du raccord de dérivation.

Dans la forme de réalisation selon la figure 7, le tube ou tuyau principal 10 à base de caoutchouc est muni d'un raccord de dérivation 80 qui comprend, comme dans la forme de réalisation précédente, un manchon 81 sur la majeure partie de la périphérie angulaire dudit tube et un téton tubulaire 82, en saillie radiale par rapport audit manchon, avec une surface interne 83 lisse et une surface externe 84 présentant des aspérités analogues à celle de la réalisation selon la figure 6. Dans cette variante, la zone 85 de liaison du manchon 81 au téton 82 présente, à distance de la surface externe 86 dudit manchon, un bec 87 en saillie sur la surface latérale externe 82 et avec lequel est propre à coopérer, à encliquetage, le bord 88 d'une nervure 89 ménagée dans un manchon 90 qui est emmanché sur un tube ou tuyau 91 destiné à former un circuit secondaire lorsqu'il est fixé sur le téton 82. Comme dans la réalisation précédente, un choix approprié des dimensions du tube secondaire 91 et du manchon de matière plastique 90 permet d'assurer une solidarisation satisfaisante dudit tube secondaire et du raccord de dérivation.

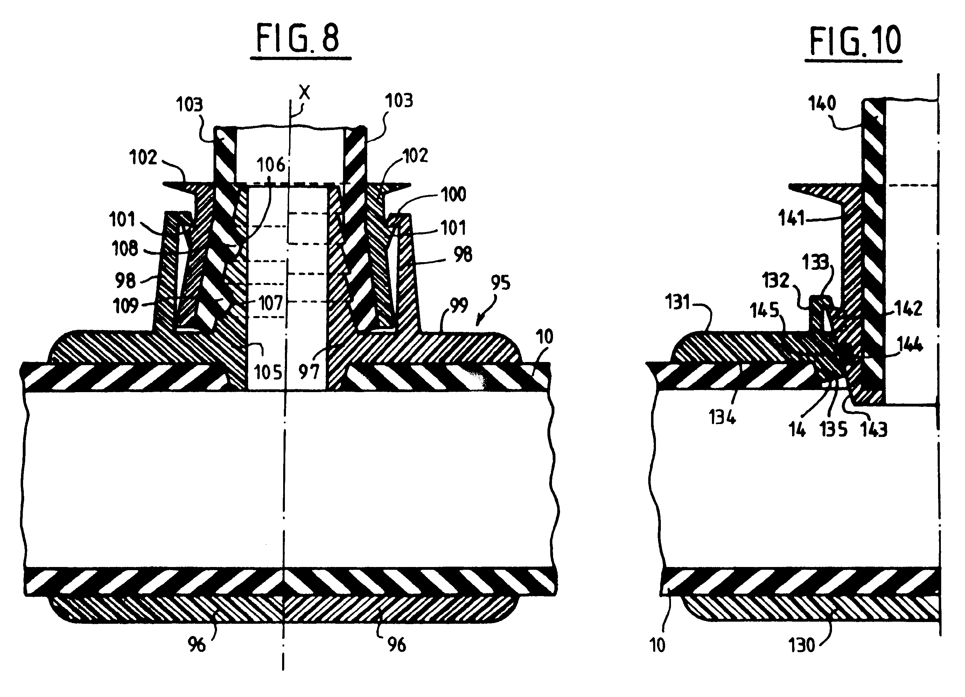

Dans la réalisation montrée sur la partie droite de la figure 8, le tube ou tuyau principal 10 à base de caoutchouc est muni d'un raccord de dérivation 95 qui comprend, comme dans la forme de réalisation précédente, un manchon 96 sur la majeure partie de sa périphérie angulaire et un téton tubulaire 97 de même forme que le manchon 92 de la réalisation décrite en référence à la figure 7. Ici, toutefois, un fût 98 en saillie sur la surface externe 99 du manchon 96 présente à son extrémité libre un bec 100, tourné vers l'axe X du fût et avec lequel est propre à coopérer, à encliquetage, une nervure 101 ménagée sur la surface externe d'un manchon 102 lequel enserre un second tube ou tuyau 103 destiné à former un circuit secondaire lorsqu'il est fixé sur le téton 97.

La structure de la réalisation selon la partie gauche de la figure 8 est semblable à celle qui vient d'être décrite pour la partie droite, sous réserve que le téton 105, analogue au téton 97 de la réalisation précédente, présente une surface externe à une ou plusieurs gorges circulaires comme 106 ou 107, d'axe X. Dans cette réalisation, où la liaison au tube secondaire 103 a également lieu par l'intermédiaire d'un fût 98 et d'une lèvre 101 d'un manchon 102, on prévoit que la surface interne dudit tube secondaire soit conformée au voisinage de son extrémité suivant des bourrelets internes 108 et 109 de section droite conjuguée de celle des gorges 106 et 107.

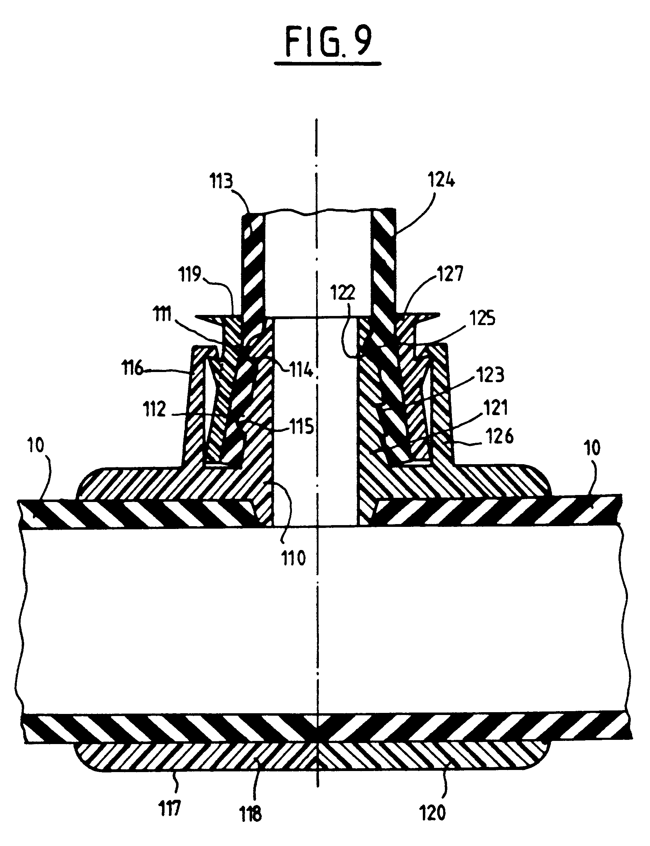

Dans la réalisation montrée sur la partie gauche de la figure 9, et qui est très proche de celle qui vient d'être décrite immédiatement ci-dessus, on prévoit que le téton 110, analogue au téton 105 de la réalisation précédente, soit conformé sur sa surface externe suivant des nervures 111 et 112 à section droite en arc de cercle, le tube ou tuyau secondaire 113 étant alors conformé, dans sa zone d'extrémité, suivant des gorges 114 et 115 de section droite conjuguée de celle des nervures. Dans cette réalisation, également, c'est par l'intermédiaire d'un fût 116 en saillie sur la surface externe 117 du manchon 118 surmoulé in situ que le manchon 119 analogue au manchon 102 de la réalisation précédente, est encliqueté sur le raccord surmoulé.

Dans la réalisation illustrée sur la partie droite de la figure 9, le surmoulage du manchon 120 sur le tube ou tuyau principal 10 à base de caoutchouc est conduit de manière à ménager un téton tubulaire 121 dont la surface présente à la fois une gorge annulaire 122 et une partie en écailles ou arêtes de poisson 123, le tube ou tuyau secondaire 124 étant alors conformé pour ménager un bourrelet annulaire 125 en saillie sur sa face interne. Comme dans les trois réalisations décrites immédiatement ci-dessus, un fût 126, à extrémité conformée suivant un bec, est prévu pour coopérer avec une nervure de forme conjuguée d'un manchon 127 enserrant le tube ou tuyau secondaire 124.

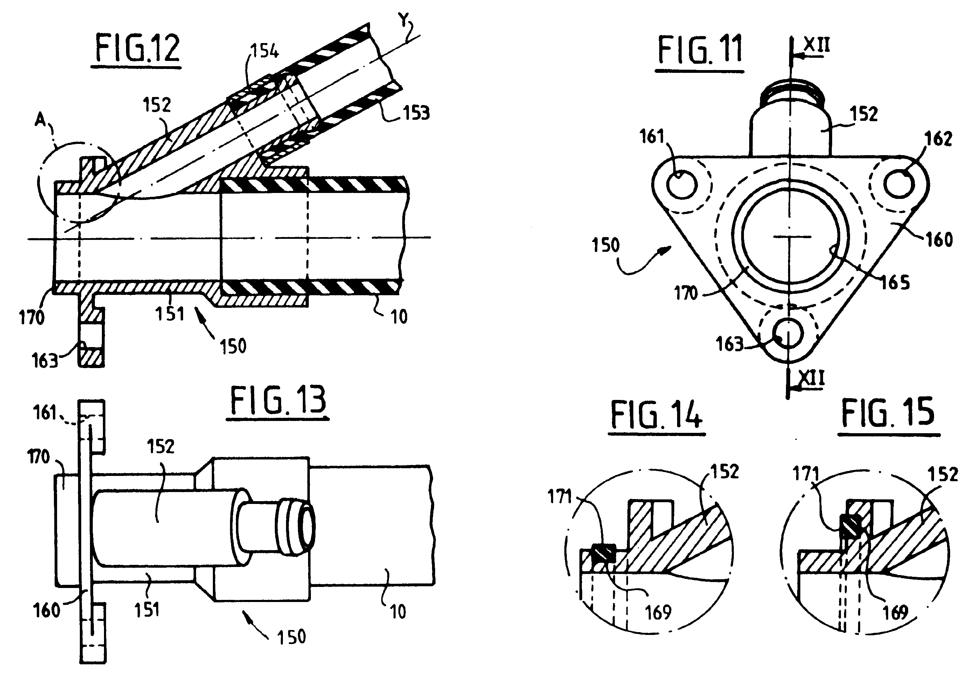

Dans la réalisation selon la figure 10, le tube ou tuyau principal 10 à base de caoutchouc est muni d'un manchon 130 sur la majeure partie de la périphérie angulaire dudit tube, ledit manchon en matière plastique moulée in situ étant conformé sur sa face externe 131 suivant un fût de courte hauteur 132 avec bec d'extrémité 133 et sur sa face interne 134 suivant un apendice 135 logé dans l'orifice 14 du tube ou tuyau 10. Un tube ou tuyau secondaire 140, lui aussi à base de caoutchouc est muni sur sa face externe d'un manchon 141 présentant une nervure 142 propre à coopérer avec le bec 133 et une partie d'extrémité 143 tronconique, dans laquelle est ménagée une gorge de réception d'un joint torique 145. Dans la condition d'assemblage, la partie tronconique 143 du manchon 141 coopère à emmanchement conique avec la surface interne de l'apendice 135, le joint torique 145 assurant une bonne étanchéité au fluide circulant dans le tube ou tuyau 10 et le tube ou tuyau secondaire 140.

Dans la réalisation montrée sur les figures 11 à 15, le tube ou tuyau principal 10 à base de caoutchouc est muni d'un raccord de dérivation 150, en matière plastique, surmoulée in situ sur le tube ou tuyau 10 et qui comprend un tronçon tubulaire 151, coaxial au tube ou tuyau 10 et un tronçon tubulaire 152 d'axe Y incliné sur l'axe du tube ou tuyau 10. Sur le tronçon 152 est fixé un tube ou tuyau secondaire 153, coaxial audit tronçon et maintenu sur celui-ci par l'intermédiaire d'une bague 154 en matière plastique surmoulée ou collée. Dans une telle réalisation l'invention prévoit complémentairement, de conformer la matière plastique surmoulée in situ suivant un patin 160, par exemple à contour triangulaire (figure 11) et aux angles duquel sont ménagés des trous de fixation 161, 162 et 163, la semelle 160 étant en outre percée d'un trou 165, de même axe et de même diamètre que ceux du tronçon tubulaire 151. Un tel dispositif, qui peut être muni de plusieurs tronçons tubulaires de dérivation courte 152 est d'un emploi particulièrement commode pour sa fixation sur une partie de véhicule automobile ou analogue. Lorsque, pour une application déterminée, le montage doit être effectué à étanchéité, l'invention prévoit de ménager une gorge 169 sur une face du patin 160, ou sur une partie tubulaire 170 prolongeant le tronçon 151, ladite gorge étant propre à recevoir un joint d'étanchéité 171, figures 14 et 15, mis en place par surmoulage ou plus simplement rapporté dans ladite gorge.

## Revendications

1. Tube ou tuyau (10), comportant un raccord de dérivation ou analogue en matière plastique surmoulé in situ sur lui sous la forme d'un manchon (15, 21, ...) qui l'enserre extérieurement sur au moins la majeure partie de sa périphérie angulaire avec une partie (11, 22, ...) d'une pièce avec ledit manchon et en saillie radiale par rapport audit machon (15, 21, ...) constituant la dérivation ou analogue, caractérisé en ce que le tube ou tuyau (10), est un tube ou tuyau souple à base de caoutchouc EPDM, de caoutchouc polychloroprène ou de caoutchouc silicone et en ce que ledit raccord ou analogue (11, 22, ...) en matière plastique du type thermoplastique ou thermodurcissable est solidarisé par adhérence et par l'effet même du surmoulage par injection avec ledit tube ou tuyau souple (10).

2. Tube ou tuyau selon la revendication 1, notamment durite pour moteur de véhicule automobile, caractérisé en ce que le raccord (11, 22, 52, ...) surmoulé in situ sur le tube ou tuyau (10) ménage un embout destiné au montage d'un second tube ou tuyau (25, 60, ...) formant dérivation par rapport au premier.

3. Tube ou tuyau selon la revendication 2, caractérisé en ce que l'embout (22) ménage un évidement cylindrique (24) dans lequel est reçu le second tube ou tuyau (25) également à base de caoutchouc et fixé par sa surface externe (26) dans ledit évidement (24).

4. Tube ou tuyau selon la revendication 1, caractérisé en ce que le raccord (11, 22, 52, ...) ménage un embout se prolongeant par un appendice (17, 69) qui pénètre dans un orifice de dérivation (14) du tube ou tuyau (10) et qui affleure la surface interne dudit tube ou tuyau (10).

5. Tube ou tuyau selon la revendication 2, caractérisé en ce que le raccord en matière plastique surmoulé in situ sur le tube ou tuyau (10) comprend des moyens d'accrochage (72, 87) à encliquetage d'un manchon (76, 90) enserrant le second tube ou tuyau (77, 91) formant dérivation par rapport audit tube ou tuyau principal (10).

6. Tube ou tuyau selon la revendication 5, caractérisé en ce que le manchon (102, 119, 127) qui enserre le second tube ou tuyau (103, 113, 124) est conformé sur une partie de sa surface externe suivant des gorges (106, 107, 122) ou des nervures (111, 112) et le tube suivant des nervures (108, 109) ou gorges (114, 115) de forme et dimensions conjuguées.

7. Tube ou tuyau selon la revendication 4, caractérisé en ce que l'appendice (135) qui pénètre dans l'orifice (14) du tube ou tuyau (10) est conformé suivant une portée conique avec laquelle est propre à coopérer l'extrémité tronconique (143) d'un manchon (141) fixé sur un second tube ou tuyau (140) avec interposition d'un joint d'étanchéité (145) comme un joint torique ou analogue.

8. Tube ou tuyau selon l'une quelconque des revendications précédentes, caractérisé en ce que le raccord ménage un moyen de fixation (43) comme une bride, une patte, une oreille, un patin (160) ou analogue sur un support approprié.

9. Tube ou tuyau selon la revendication 8, caractérisé en ce que ledit moyen de fixation est une bride (44) avantageusement percée d'un orifice (45) de passage d'un élément de fixation comme une vis ou analogue.

10. Procédé de fabrication d'un tube ou tuyau comportant un raccord de dérivation ou analogue suivant lequel on met en place à l'intérieur dudit tube ou tuyau (10) un noyau rigide (N) destiné à le supporter ; on place ledit tube ou tuyau (10) et le noyau (N) dans le moule d'une presse d'injection de matière plastique ; on injecte in situ dans le moule conformé suivant le raccord de dérivation ou analogue une matière plastique qui enserre ledit tube ou tuyau (10) sur la face externe de celui-ci ; on extrait l'ensemble du moule et on retire le noyau (N) du tube ou tuyau, caractérisé en ce que le tube ou tuyau (10) est un tube ou tuyau souple à base de caoutchouc EPDM, de caoutchouc polychloroprène ou de caoutchouc silicone et en ce que pour obtenir un raccord de dérivation ou analogue dans lequel la matière plastique du type thermoplastique ou thermodurcissable injectée est solidarisée par adhérence par l'effet même du surmoulage audit tube ou tuyau (10) on conduit l'injection de ladite matière plastique à une pression d'injection comprise entre 600 et 1200 Bars et à une température d'injection comprise entre 160 et 300°C.

11. Procédé de fabrication selon la revendication 10, caractérisé en ce que l'on perce d'abord le tube ou tuyau (10) suivant un orifice de dérivation (14) avant mise en place à l'intérieur dudit tube ou tuyau du noyau rigide (N) destiné à le supporter, et en ce que l'on surmoule la matière plastique sur le tube ou tuyau et dans une zone adjacente audit orifice sous la forme d'un manchon (15, 31, ...) qui enserre ledit tube ou tuyau sur au moins la majeure partie de sa périphérie angulaire, à l'extérieur de celui-ci, avec un embout, téton, ou analogue (11, 22, ...), en saillie radiale par rapport audit manchon et à l'aplomb dudit orifice (14).

12. Procédé de fabrication selon la revendication 10, caractérisé en ce que, simultanément au surmoulage de la matière plastique sur le tube ou tuyau souple (10), on dispose au voisinage de la surface externe dudit tube ou tuyau un insert (i) comme une sonde de pression, de température ou d'une autre grandeur à mesurer et qui est ainsi, de fabrication, noyée dans le dispositif associé audit tube ou tuyau souple (10).

## Patentansprüche

1. Rohr oder Schlauch (10) mit einem Verzweigungs-Verbindungsstück oder Entsprechendem aus Plastikmasse, das in situ, in Form einer Manschette (15,21,...) auf das Rohr oder den Schlauch (10) aufgeformt ist, wobei die Manschette (15,21,...) mit einem Teil (11,22,...) zumindest den größeren Teil der winkligen Außenoberfläche des Rohres oder Schlauchs (10) umfaßt, wobei dieses Manschettenteil (11,22,...) einstückig mit der Manschette und einem, bezüglich der Manschette radialen Vorsprung ausgebildet ist, der die Verzweigung oder Entsprechendem bildet, dadurch gekennzeichnet, daß das Rohr oder Schlauch (10) ein biegsames Rohr oder ein biegsamer Schlauch auf der Basis von EPDM-Kautschuk, Polychloropren-Kautschuk oder von Silikon-Kautschuk ist und daß das Verbindungsstück oder Entsprechendes (11,22,...) aus Plastikmasse von thermoplastischem oder thermohärtendem Typ ist und durch Adhäsion oder durch den Effekt der Aufformung durch Einspritzung mit dem biegsamen Rohr oder Schlauch (10) verbunden ist.

2. Rohr oder Schlauch nach Anspruch 1, insbesondere biegsam für Automobilmotoren, dadurch gekennzeichnet, daß das Verbindungsstück (11,22,52,...), das in situ auf das Rohr oder den Schlauch (10) aufgeformt ist, eine Zwinge bildet, die zur Montage eines zweiten Rohres oder Schlauchs (25,60,...) zur Bildung einer Abzweigung von dem ersten Rohr oder Schlauch (10) bestimmt ist.

3. Rohr oder Schlauch nach Anspruch 2, dadurch gekennzeichnet, daß die Zwinge (22) eine zylindrische Aussparung (24) bildet, in die das zweite Rohr oder der zweite Schlauch (25), das oder der ebenfalls auf Kautschukbasis hergestellt ist, aufgenommen und durch seine äußere Oberfläche (26) in der Aussparung (24) fixiert ist.

4. Rohr oder Schlauch nach Anspruch 1, dadurch gekennzeichnet, daß das Verbindungsstück (11,22,52,...) eine Zwinge bildet, die sich in einem Fortsatz (17,69) verlängert, der in eine Abzweigungsöffnung (14) des Rohres oder des Schlauchs (10) eindringt und sich an die innere Oberfläche des Rohres oder Schlauchs (10) anschmiegt.

5. Rohr oder Schlauch nach Anspruch 2, dadurch gekennzeichnet, daß das Verbindungsstück aus Plastikmasse, das in situ auf das Rohr oder den Schlauch (10) aufgeformt ist, Befestigungsmittel (72,87) als Sperrvorrichtung einer Manschette (76,90) aufweist, die das zweite Rohr oder den zweiten Schlauch (77,91), das oder der die Abzweigung bezüglich des Hauptrohres oder Hauptschlauchs (10) bildet, umfaßt.

6. Rohr oder Schlauch nach Anspruch 5, dadurch gekennzeichnet, daß auf einem Teil der äußeren Oberfläche der Manschette (102,119,127), die das zweite Rohr oder den zweiten Schlauch (103,113,124) umfaßt, aufeinanderfolgend Rillen (106,107,122) oder Rippen (111,112) ausgebildet sind sowie das Rohr dem entsprechend in konjugierter Form und Dimension, Rippen (108,109) oder Rillen (114,115) aufweist.

7. Rohr oder Schlauch nach Anspruch 4, dadurch gekennzeichnet, daß der Fortsatz (135), der in die Öffnung (14) des Rohrs oder Schlauchs (10) eindringt, als konischer Bereich ausgebildet ist, der mit dem kegelstumpfartigen äußeren Ende (143) einer Manschette (141), die auf einem zweiten Rohr oder Schlauch (140) befestigt ist, zusammenwirkt, unter Einfügung einer Abdichtung (145), wie einer torischen Dichtung oder ähnlichem, zusammenwirkt.

8. Rohr oder Schlauch nach einem der vorhergehenden Ansprüche, dadurch gekennzeichnet, daß das Verbindungsstück ein Befestigungsmittel (43) auf einer geeigneten Auflage bildet, wie eine Klammer, Lasche, Öse, Brücke (160) oder Entsprechendes.

9. Rohr oder Schlauch nach Anspruch 8, dadurch gekennzeichnet, daß das Befestigungsmittel eine Klammer (44) ist, die vorteilhafterweise eine Durchgangsöffnung für ein Befestigungselement, wie eine Schraube oder ähnliches aufweist.

10. Verfahren zur Herstellung eines Rohrs oder Schlauchs mit einem Verzweigungs-, Verbindungsstück oder Entsprechendem, bei dem im Inneren des Rohres oder Schlauchs (10) ein fester Kern (N) angeordnet wird, der zur Unterstützung bestimmt ist, bei dem das Rohr oder der Schlauch (10) mit dem Kern (N) in die Form einer Injektionspresse für Plastikmasse eingebracht wird, bei dem in die entsprechend dem Verzweigungs-Verbindungsstück ausgestalteten Form in situ eine Plastikmasse eingespritzt wird, die das Rohr oder den Schlauch (10) auf der Außenseite umfaßt, bei dem diese Anordnung aus der Form entfernt wird und der Kern (N) aus dem Rohr oder dem Schlauch entfernt wird, dadurch gekennzeichnet, daß das Rohr oder der Schlauch (10) ein biegsames Rohr oder ein biegsamer Schlauch auf der Basis von EPDM-Kautschuk, Polychloropren-Kautschuk oder Silikon-Kautschuk ist, und daß die Einspritzung der Plastikmasse bei einem Einspritzdruck zwischen 600 und 1200 bar und bei einer Einspritztemperatur zwischen 160 und 300 C erfolgt, um ein Verzweigungs-Verbindungsstück oder Entsprechendes zu erhalten, bei dem die eingespritzte Plastikmasse vom thermoplastischen oder thermohärtenden Typ durch Adhäsion oder durch den Effekt der Aufformung mit dem Rohr oder dem Schlauch (10) verbunden ist.

11. Verfahren nach Anspruch 10, dadurch gekennzeichnet, daß vor dem Einbringen des festen, zur Unterstützung bestimmten Kerns (N) in das Innere des Rohres oder Schlauchs, eine Verzweigungsöffnung (14) in das Rohr oder den Schlauch (10) gebohrt wird, und daß die Plastikmasse auf das Rohr oder den Schlauch und in einer benachbarten Zone der Verzweigungsöffnung in Form einer Manschette (15,31,...) aufgeformt wird, wobei die Manschette zumindest den größeren Teil der winkligen Außenoberfläche des Rohres oder des Schlauchs umfaßt und eine Zwinge, Spitze oder ähnliches (11,22,...) als bezüglich der Manschette radialer Fortsatz und lotrecht zu der Verzweigungsöffnung (14) aufweist.

12. Verfahren nach Anspruch 10, dadurch gekennzeichnet, daß gleichzeitig zur Aufformung der Plastikmasse auf das biegsame Rohr oder den biegsamen Schlauch, benachbart zur äußeren Oberfläche des Rohrs oder des Schlauchs ein Einsatz (i), wie eine Sonde zum Messen des Drucks, der Temperatur oder einer anderen Meßgröße, angeordnet wird, so daß der Einsatz (i) herstellungsbedingt in die, mit dem biegsamen Rohr oder biegsamen Schlauch (10) verbundene Vorrichtung eingelassen ist.

**Claims**

1. A tube or pipe (10) including a branch coupling or the like made of plastic overmolded in situ in the form of a sleeve (15, 21, ...) gripping it externally over at least the majority of its angular periphery together with a portion (11, 22, ...) integral with said sleeve and projecting radially relative to said sleeve (15, 21, ... ) constituting the branch or the like, the tube or pipe ( 10 ) being characterized in that it is a flexible tube or pipe based on EPDM rubber, polychloroprene rubber, or silicone rubber, and in that said coupling or the like (11, 22, ...) of the plastic or thermosetting plastic is secured by adhesion and directly by the effect of injection molding over said flexible tube or pipe (10).

2. A tube or pipe according to claim 1, in particular a flexible pipe for the engine of a motor vehicle, characterized in that the coupling (11, 22, 52, ...) overmolded in situ on the tube or pipe (10) forms an endpiece for receiving a second tube or pipe (25, 60, ...) forming a branch relative to the first.

3. A tube or pipe according to claim 2, characterized in that the endpiece (22) forms a cylindrical hole (24) in which the second tube or pipe (25) also based on rubber is received and is fixed by its outside surface (26) in said hole (24).

4. A tube or pipe according to claim 1, characterized in that the coupling (11, 22, 52, ...) provides an endpiece extending via an appendix (17, 69) which penetrates into a branch orifice (14) of the tube or pipe (10) and which comes flush with the inside surface of said tube or pipe (10).

5. A tube or pipe according to claim 2, characterized in that the coupling of plastic overmolded in situ on the tube or pipe (10) includes snap-fastening means (72, 87) for engaging a sleeve (76, 90) surrounding the second tube or pipe (77, 91) forming a branch relative to said main tube or pipe (10).

6. A tube or pipe according to claim 5, characterized in that the sleeve (102, 119, 127) surrounding the second tube or pipe (103, 113, 124) is shaped over a portion of its outside surface to have grooves (106, 107, 122) or ribs (111, 112), and the tube is formed with ribs (108, 109) or grooves (114, 115) that are complementary in shape and size.

7. A tube or pipe according to claim 4, characterized in that the appendix (135) which penetrates into the orifice (14) of the tube or pipe (10) is shaped to constitute a conical bearing surface suitable for co-operating with the frustoconical end (143) of a sleeve (141) fixed on the second tube or pipe (140) with a sealing gasket (145) such as an O-ring or the like being interposed therebetween.

8. A tube or pipe according to any preceding claim, characterized in that the coupling provides fixing means (43) such as a flange, a tab, a lug, a sole plate, or the like on an appropriate support.

9. A tube or pipe according to claim 8, characterized in that said fixing means is a flange (44) advantageously pierced by an orifice (45) for passing a fastener such as a screw or the like.

10. A method of manufacturing a tube or pipe including a branch coupling or the like, in which a rigid core (N) is placed inside said tube or pipe (10) to support it; said tube or pipe (10) and the core (N) are placed in the mold of a plastic injection press; a plastic is injected in situ into the mold which is shaped to constitute the branch coupling or the like, which plastic grips onto the outside face of said tube or pipe (10); the assembly is extracted from the mold; and the core (N) is withdrawn from the tube or pipe, the method being characterized in that the tube or pipe (10) is a flexible tube or pipe based on EPDM rubber, on polychloroprene rubber, or on silicone rubber, and in that to obtain a branch coupling or the like in which the injected thermosetting or thermoplastic type plastic is secured by adhesion directly by the effect of being molded over said tube or pipe (10), the injection of said plastic is performed at an injection pressure lying in the range 600 bars to 1200 bars and at an injection temperature lying in the range 160°C to 300°C.

11. A manufacturing method according to claim 10, characterized in that the tube or pipe (10) is initially pierced by a branch orifice (14) prior to installing the supporting rigid core (N) inside said tube or pipe, and in that the plastic is molded over the tube or pipe in a zone adjacent to said orifice in the form of a sleeve (15, 31, ...) which grips said tube or pipe over at least a major portion of its external angular periphery, with an endpiece, stud, or the like (11, 22, ...) projecting radially from said sleeve over said orifice (14).

12. A manufacturing method according to claim 10, characterized in that simultaneously with the plastic being molded over the flexible tube or pipe (10), an insert (i) such as a pressure probe, a temperature probe, or a probe for some other magnitude to be measured is disposed in the vicinity of the outside surface of said tube or pipe, with the insert thus being embedded during manufacture in the device associated with said flexible tube or pipe (10).

FIG.1

FIG.2

FIG.3

FIG.4

FIG.4a

FIG.5

# FIG.6

77
76
71
65    72
73
75    70
68
67
14
69
10    66

# FIG.7

91
90
80    89
86
85    88
84
82
83
87
10    81

EP 0 277 058 B1

FIG. 8

FIG. 10

EP 0 277 058 B1

# FIG. 9

FIG.12

154

152

153

A

Y

170

151

150

163

10

FIG. 11

XII

152

161

162

160

150

170

165

163

XII

FIG. 13

161

170

152

160

151

150

10

FIG. 14

171

171

152

169

FIG. 15

171

152

169

EP 0 277 058 B1